# EUROPÄISCHE PATENTSCHRIFT

(11) **EP 2 433 530 B1**
(45) Veröffentlichungstag und Bekanntmachung des Hinweises auf die Patenterteilung: **31.12.2014**
(21) Anmeldenummer: 11007398.8
(22) Anmeldetag: 12.09.2011
(51) Int. Cl.: A47J 37/06, A47J 37/07

(54) **Elektrisches Grillgerät**
Electric grill
Grill électrique

(30) Priorität: 27.09.2010 DE 102010046556
(43) Veröffentlichungstag der Anmeldung: 28.03.2012
(73) Patentinhaber: Severin Elektrogeräte GmbH, 59846 Sundern (DE)
(72) Erfinder: Gerke, Hans-Josef, 59846 Sundern (DE); Krewinkel, Thomas, 58840 Plettenberg (DE)
(74) Vertreter: Köchling, Conrad-Joachim

(56) Entgegenhaltungen:
- GB-A- 2 360 694
- US-A- 5 934 180

## Beschreibung

Die Erfindung betrifft ein elektrisches Grillgerät, bestehend aus einem Gehäuse mit einer Tropfschale zum Aufnehmen von vom Grillgut abtropfenden Säften und zur Aufnahme von Wasser, einem oberhalb der Tropfschale angeordneten Heizkörper zum Erhitzen des Grillgutes, einem den Heizkörper überdeckenden Grillrost oder dergleichen Grillgutträger, sowie gegebenenfalls einem Untergestell, welches das Gehäuse samt der davon getragenen Komponenten trägt, wobei unter der Tropfschale ein Berührungsschutz angeordnet ist.

Derartige Grillgeräte sind im Stand der Technik vielfach bekannt. Vor allem dann, wenn solche elektrischen Grillgeräte von einem Untergestell getragen werden, beispielsweise einem Standuntergestell, welches auf dem Boden abgestellt wird und welches das Grillgerät in einer für den Benutzer angenehmen Höhenposition trägt, besteht eine Gefahr darin, dass der Benutzer unter das eigentliche Grillgerät greifen kann und das Grillgerät mit den Händen unterhalb der Tropfschale ergreift. Sofern die Tropfschale sich beim Grillen erheblich erhitzt hat, besteht damit die Gefahr, dass der Benutzer sich an den Händen verbrennt.

Aus der US 5,934,180 A und aus der GB 2,360,694 A ist ein gattungsgemäßes Grillgerät bekannt. Hierbei ist der Berührungsschutz durch eine massive Gerätewandung des aus Metall bestehenden Gerätes gebildet.

Ausgehend von diesem Stand der Technik liegt der Erfindung die Aufgabe zugrunde, ein Grillgerät gattungsgemäßer Art zu schaffen, bei dem die Gefahr, dass der Benutzer sich an der Tropfschale verbrennen kann, vermieden oder vermindert ist.

Zur Lösung dieser Aufgabe schlägt die Erfindung vor, dass der Berührungsschutz als gelochtes Wandungsteil ausgebildet ist und/oder dass der Berührungsschutz als ein netzartiges Flächengebilde ausgebildet ist.

Gemäß der Erfindung ist unter der Tropfschale, vorzugsweise im geringen Abstand von der Tropfschale ein Berührungsschutz angeordnet. Sofern der Benutzer unter das eigentliche Grillgerät greift, also seine Hände der Tropfschale von unten annähert, kann er die Tropfschale nicht unmittelbar berühren, sondern er kann nur den Berührungsschutz berühren, welcher in geeigneter Weise ausgestattet und ausgebildet ist, so dass ein Verbrennen der Hände des Benutzers vermieden ist.

Dabei ist vorgesehen, dass der Berührungsschutz als gelochtes Wandungsteil ausgebildet ist.

Das gelochte Wandungsteil kann beispielsweise nach Art eines Lochbleches mit einer Vielzahl von Lochungen versehen sein. Das Material, aus welchem das Wandungsteil besteht, ist vorzugsweise ein schlecht wärmeleitendes Material.

Alternativ oder zusätzlich kann auch vorgesehen sein, dass der Berührungsschutz als ein netzartiges Flächengebilde ausgebildet ist.

Auch hierbei besteht das netzartige Flächengebilde vorzugsweise aus einem schlecht wärmeleitenden Material. Auch eine Kombination von gelochtem Wandungsteil mit einem netzartigen Flächengebilde ist brauchbar.

Eine besondere Weiterbildung wird darin gesehen, dass der Berührungsschutz einteilig mit dem Gehäuse ausgebildet ist, wobei die Teile vorzugsweise aus Kunststoff bestehen.

Üblicherweise ist das Gehäuse als offenes Rahmenteil ausgebildet, in welches die Tropfschale und die weiteren Elemente des Grillgerätes einsetzbar sind. Erfindungsgemäß kann der Berührungsschutz einteilig mit diesem Gehäuse ausgebildet sein, also quasi eine Bodenfläche des Gehäuses bilden, wobei beide Teile aus Kunststoff gefertigt sind, also einstückig in einem Werkzeug hergestellt werden können. Auch können die Teile separat hergestellt werden und anschließend in geeigneter Weise miteinander verbunden werden. Auf diese Weise ist eine unverlierbare Anordnung des Berührungsschutzes an dem Gehäuse gewährleistet, so dass bei der Benutzung des Grillgerätes in jedem Falle sichergestellt ist, dass der Berührungsschutz auch ordnungsgemäß installiert ist. Eine Manipulation durch den Benutzer, durch welche er den Berührungsschutz entfernen kann, ist dabei nicht möglich.

Auch ist durch eine solche Anordnung eine exakte Positionierung des Berührungsschutzes relativ zu der Unterseite der Tropfschale schon herstellerseitig ermöglicht, so dass ausreichende Abstände zwischen der Unterseite der Tropfschale und dem Berührungsschutz gebildet sind.

Alternativ kann auch vorgesehen sein, dass der Berührungsschutz als separates Bauteil aus Kunststoff ausgebildet ist und am Gehäuse oder am Untergestell gehalten und/oder befestigt ist.

Eine solche Ausbildung ist besonders kostengünstig zu fertigen, wobei auch eine einfache Nachrüstung von bisher üblichen Geräten mit einem solchen Berührungsschutz möglich ist, wobei der Berührungsschutz dann entweder in geeigneter Weise mit dem Gehäuse verbunden wird oder am Untergestell gehalten ist.

Bevorzugt ist zudem vorgesehen, dass der Berührungsschutz korbartig mit einer gelochten Bodenfläche und ungelochten Randteilen ausgebildet ist.

Durch die korbartige Ausbildung des Berührungsschutzes wird sichergestellt, dass ein vom Hersteller gewünschter Abstand der gelochten Bodenfläche von der Unterseite der Tropfschale eingehalten wird. Dieser Abstand ist durch die Randteile des korbartigen Berührungsschutzes gewährleistet. Diese Randteile können am Gehäuse angeformt oder am Gehäuse befestigt sein.

Insbesondere ist bevorzugt vorgesehen, dass der Berührungsschutz in einem Abstand von einigen Zentimetern zur Unterseite der Tropfschale angeordnet ist, insbesondere der Teil des Berührungsschutzes, der etwa parallel zur Unterseite der Tropfschale ausgerichtet ist und die Lochungen aufweist.

Sofern beispielsweise der Berührungsschutz lediglich als ebenes Flächenelement ausgebildet ist, gewährleistet der Abstand von einigen Zentimetern zur Unterseite der Tropfschale, dass der Benutzer nicht in diesen Spalt mit seinen Fingern eingreifen kann. Der Abstand ist folglich so zu wählen, dass der Benutzer nicht ohne weiteres mit den Fingern in den Spalt zwischen Berührungsschutz und Unterseite der Tropfschale eingreifen kann. Sofern der Berührungsschutz einen umlaufenden Rand oder dergleichen aufweist, ist durch diesen Rand der Eingriff in den Spalt zwischen Unterseite der Tropfschale und Berührungsschutz verhindert. Der Rand bildet aber dann gleichzeitig das Abstandsmaß zwischen Unterseite der Tropfschale und Berührungsschutz.

Ein Ausführungsbeispiel der Erfindung ist in der Zeichnung dargestellt und im Folgenden näher beschrieben.

Es zeigt:
- Figur 1: ein erfindungsgemäßes Grillgerät in Explosionsdarstellung;

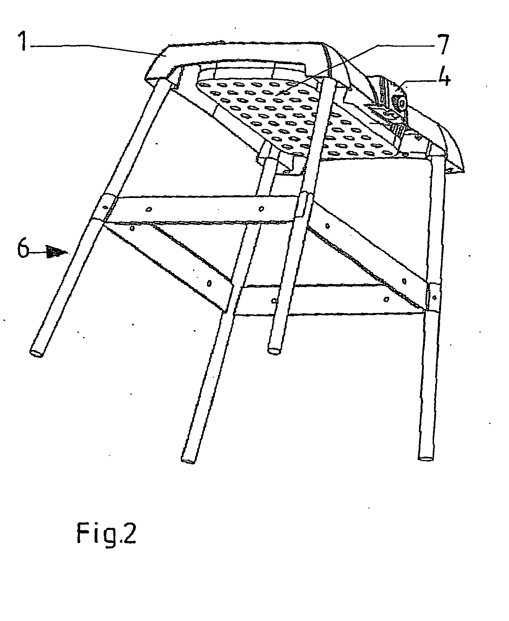

- Figur 2: das komplette Grillgerät von schräg unten gesehen;

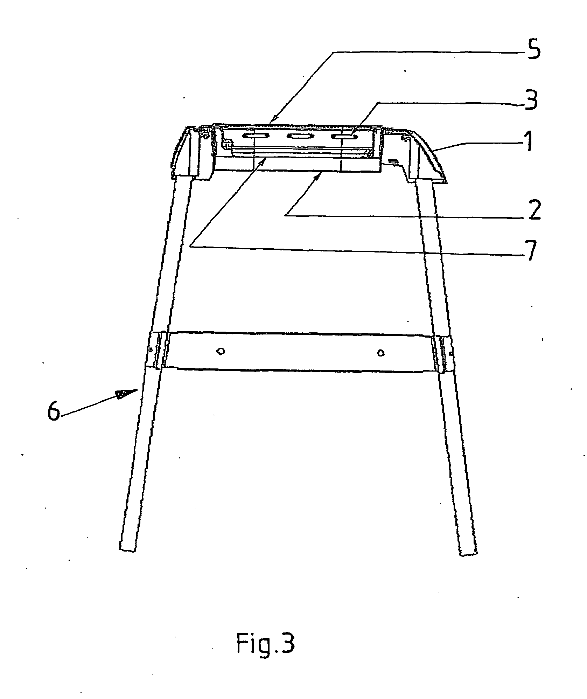

- Figur 3: das Grillgerät in einem Mittelschnitt gesehen.

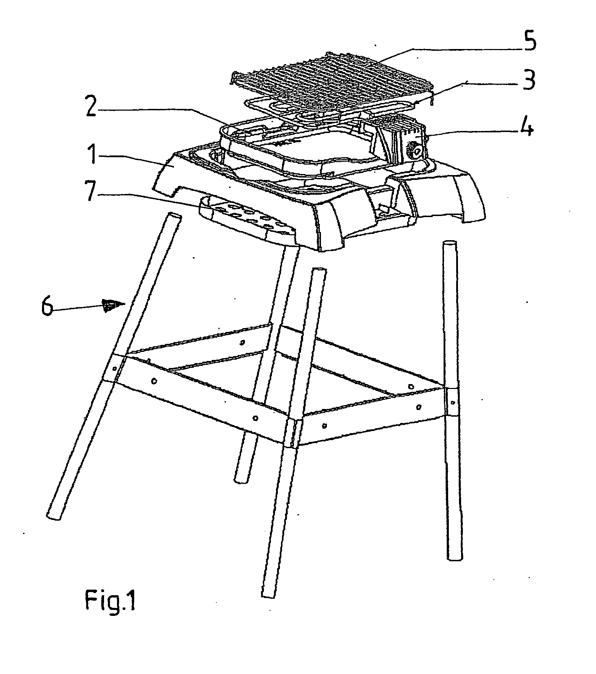

Wie insbesondere aus Figur 1 ersichtlich, ist der Gegenstand der Erfindung ein elektrisches Grillgerät.

Dieses besteht aus einem Gehäuse 1, welches als offener Rahmen von im Wesentlichen rechteckiger Grundform mit in den Eckbereichen vorgesehenen Standfüßen ausgebildet ist. In das Gehäuse ist eine Tropfschale 2 eingesetzt. Diese Tropfschale 2 dient dazu, vom Grillgut abtropfende Säfte oder dergleichen aufzufangen. Damit solche abzutropfenden Säfte oder dergleichen nicht in der Tropfschale anbrennen, wird die Tropfschale regelmäßig mit Wasser gefüllt. Oberhalb der Tropfschale 2 ist ein Heizkörper 3 zum Erhitzen des Grillgutes angeordnet, der über eine Anschlusseinrichtung 4 leistungsgeregelt werden kann. Die Anschlusseinrichtung 4 ist beispielsweise mittels eines Kabels und eines Netzsteckers an das Stromnetz anzuschließen. Der Heizkörper 3 ist beispielsweise als mäandrierendes Flächenelement ausgebildet. Weiterhin ist ein Grillrost 5 vorgesehen, der oberhalb des Heizkörpers 3 angeordnet ist und auf den das Grillgut aufgelegt werden kann. Gegebenenfalls kann dieser Grillrost 5 in unterschiedlichen Höhenlagen relativ zur Erstreckung des Heizkörpers 3 angeordnet werden. Schließlich ist ein Untergestell 6 vorgesehen, welches das Gehäuse 1 trägt. Dazu ist im Ausführungsbeispiel das Untergestell 6 mit vier in den Eckbereichen befindlichen Rohrstützen ausgebildet, die in entsprechende Ausnehmungen der Füße des Gehäuses 1 eingreifen.

Nach der bisherigen Ausbildung solcher Grillgeräte ist es möglich, dass der Benutzer nach dem Betrieb oder beim Betrieb des Grillgerätes mit seinen Händen die Tropfschale 2 von der Unterseite her ergreift, wenn er beispielsweise das Grillgerät von dem Untergestell abheben möchten. Da sich die Tropfschale 2 insbesondere dann, wenn sie nicht mit Wasser gefüllt ist, erheblich erhitzen kann, besteht die Gefahr, dass der Benutzer seine Finger an der Tropfschale 2 verbrennt.

Um dies zu vermeiden, ist gemäß der Erfindung unter der Tropfschale 2 ein Berührungsschutz 7 angeordnet.

Im Ausführungsbeispiel ist der Berührungsschutz 7 ein gelochtes Wandungsteil, welches sich parallel zur Unterseite der Tropfschale 2 erstreckt. Je nach Ausgestaltung ist es möglich, dass der Berührungsschutz 7 einteilig mit dem Gehäuse 1 ausgebildet ist, wobei dann vorzugsweise beide Teile aus Kunststoff bestehen. Es ist aber auch möglich, den Berührungsschutz 7 als separates Bauteil beispielsweise aus Kunststoff zu fertigen. Dieses Bauteil kann dann entweder am Gehäuse 1 befestigt werden oder aber am Untergestell 6 lagerichtig positioniert gehalten und/oder befestigt werden.

Im Ausführungsbeispiel ist der Berührungsschutz 7 korbartig mit einer gelochten Bodenfläche und ungelochten Randteilen ausgebildet. In der Gebrauchslage ist der Berührungsschutz 7 mit seiner gelochten Bodenfläche im Abstand von einigen Zentimetern zur Unterseite der Tropfschale 2 ausgerichtet und angeordnet, wobei durch diesen Abstand zusätzlich eine übermäßige Erhitzung des Berührungsschutzes 7 vermieden ist und des Weiteren auch verhindert wird, dass der Benutzer in einen Spalt zwischen dem Berührungsschutz 7 und der Unterseite der Tropfschale 2 mit seinen Fingern eingreifen kann.

Die Erfindung stellt eine besonders einfache Schutzmaßnahme zur Verfügung, die entweder bei Neuherstellung von Grillgeräten in einfacher Weise in das Gehäuse 1 integriert werden kann oder aber insbesondere zum Zwecke der Nachrüstung von bestehenden Grillgeräten an das Gehäuse 1 angeschlossen oder an das Untergestell 6 angeschlossen werden kann.

## Patentansprüche

1. Elektrisches Grillgerät, bestehend aus einem Gehäuse (1) mit einer Tropfschale (2) zum Aufnehmen von vom Grillgut abtropfenden Säften und zur Aufnahme von Wasser, einem oberhalb der Tropfschale (2) angeordneten Heizkörper (3) zum Erhitzen des Grillgutes, einem den Heizkörper (3) überdeckenden Grillrost (5) oder dergleichen Grillgutträger, sowie gegebenenfalls einem Untergestell (6), welches das Gehäuse (1) samt der davon getragenen Komponenten trägt, wobei unter der Tropfschale (2) ein Berührungsschutz (7) angeordnet ist, **dadurch gekennzeichnet, dass** der Berührungsschutz (7) als gelochtes Wandungsteil ausgebildet ist und/oder dass der Berührungsschutz (7) als ein netzartiges Flächengebilde ausgebildet ist.

2. Grillgerät nach Anspruch 1, **dadurch gekennzeichnet, dass** der Berührungsschutz (7) einteilig mit dem Gehäuse (1) ausgebildet ist, wobei die Teile aus Kunststoff bestehen.

3. Grillgerät nach Anspruch 1, **dadurch gekennzeichnet, dass** der Berührungsschutz (7) als separates Bauteil aus Kunststoff ausgebildet ist und am Gehäuse (1) oder am Untergestell (6) gehalten und/oder befestigt ist.

4. Grillgerät nach einem der Ansprüche 1 bis 3,
**dadurch gekennzeichnet, dass** der Berührungsschutz (7) korbartig mit einer gelochten Bodenfläche und ungelochten Randteilen ausgebildet ist.

5. Grillgerät nach einem der Ansprüche 1 bis 4,
**dadurch gekennzeichnet, dass** der Berührungsschutz (7) in einem Abstand von einigen Zentimetern zur Unterseite der Tropfschale (2) angeordnet ist.

6. Grillgerät nach Anspruch 5, **dadurch gekennzeichnet, dass** der Teil des Berührungsschutzes (7), der etwa parallel zur Unterseite der Tropfschale (2) ausgerichtet ist und die Lochungen aufweist, in einem Abstand von einigen Zentimetern zur Unterseite der Tropfschale (2) angeordnet ist.

## Claims

1. An electric grilling device, comprising a housing (1) with a drip tray (2) for receiving the juices dripping down from the products to be grilled and for receiving water, a heating body (3) disposed above the drip tray (2) for heating the products to be grilled, a grilling grate (5) or other support for the products to be grilled disposed above the heating body (3), and, if applicable, a substructure (6) carrying the housing (1) together with the components supported thereon, under the drip tray (2) a protection device (7) against accidental contact being disposed, **characterized in that** the protection device (7) against accidental contact is configured as a perforated wall portion and/or the protection device (7) against accidental contact is configured as a net-like flat material.

2. The grilling device according to claim 1, **characterized in that** the protection device (7) against accidental contact is formed as one piece with the housing (1), the parts being made from plastic material.

3. The grilling device according to claim 1, **characterized in that** the protection device (7) against accidental contact is configured as a separate component made from plastic material and is held and/or attached at the housing (1) or at the substructure (6).

4. The grilling device according to one of claims 1 to 3, **characterized in that** the protection device (7) against accidental contact is configured as a basket with a perforated bottom face and non-perforated side portions.

5. The grilling device according to one of claims 1 to 4, **characterized in that** the protection device (7) against accidental contact is disposed in a distance of several centimeters from the bottom side of the drip tray (2).

6. The grilling device according to claim 5, **characterized in that** the portion of the protection device (7) against accidental contact that is approximately parallel to the bottom side of the drip tray (2) and comprises the perforations, is disposed in a distance of several centimeters from the bottom side of the drip tray (2).

## Revendications

1. Dispositif électrique pour griller, comprenant un boîtier (1) avec un bac d'égouttage (2) pour recevoir les jus égouttés des produits à griller et pour recevoir de l'eau, un élément de chauffage (3) disposé au-dessus du bac d'égouttage (2) pour chauffer les produits à griller, une grille (5) ou autre support pour les produits à griller disposé au-dessus de l'élément de chauffage (3), et, le cas échéant, un base du bâti (6) portant le boîtier (1) ensemble avec les components portés par celui-ci, au-dessous du bac d'égouttage (2) un dispositif de protection (7) contre le contact étant disposé, **caractérisé en ce que** le dispositif de protection (7) contre le contact est réalisé comme une partie perforée de paroi et/ou le dispositif de protection (7) contre le contact est réalisé comme un matériau plat en treillis.

2. Dispositif pour griller selon la revendication 1, **caractérisé en ce que** le dispositif de protection (7) contre le contact est réalisé comme une pièce avec le boîtier (1), les parties étant faites en matière plastique.

3. Dispositif pour griller selon la revendication 1, **caractérisé en ce que** le dispositif de protection (7) contre le contact est réalisé comme un composant séparé en matière plastique et est maintenu et/ou attaché au boîtier (1) ou à la base du bâti (6).

4. Dispositif pour griller selon une des revendications 1 à 3, **caractérisé en ce que** le dispositif de protection (7) contre le contact est réalisé comme un panier avec une surface de fond perforée et des parties latérales non perforées.

5. Dispositif pour griller selon une des revendications 1 à 4, **caractérisé en ce que** le dispositif de protection (7) contre le contact est disposé à une distance de plusieurs centimètres du côté inférieur du bac d'égouttage (2).

6. Dispositif pour griller selon la revendication 5, **caractérisé en ce que** la partie du dispositif de protection (7) contre le contact qui est environ parallèle au côté inférieur du bac d'égouttage (2) et comprend les perforations, est disposée à une distance de plusieurs centimètres du côté inférieur du bac d'égouttage (2).
